# EUROPÄISCHE PATENTSCHRIFT

(11) **EP 3 792 029 B1**
(45) Veröffentlichungstag und Bekanntmachung des Hinweises auf die Patenterteilung: **12.10.2022**
(21) Anmeldenummer: 20192302.6
(22) Anmeldetag: 24.08.2020
(51) Int. Cl.: B29C 33/00, B29C 39/24

(54) **VERFAHREN ZUR HERSTELLUNG EINER GUMMIFEDER**
METHOD FOR PRODUCING A RUBBER SPRING
PROCÉDÉ DE FABRICATION D'UN RESSORT EN CAOUTCHOUC

(30) Priorität: 10.09.2019 DE 102019213769
(43) Veröffentlichungstag der Anmeldung: 17.03.2021
(73) Patentinhaber: ContiTech Luftfedersysteme GmbH, 30165 Hannover (DE)
(72) Erfinder: Kranz, Harald - c/o Continental AG, 30419 Hannover (DE)
(74) Vertreter: Continental Corporation

(56) Entgegenhaltungen:
- EP-A1- 2 581 196
- WO-A1-2014/019008
- DE-A1-102014 219 613
- DE-A1-102015 217 873

## Beschreibung

Die Erfindung betrifft ein Verfahren zur Herstellung einer Gummifeder. Gummifedern werden oftmals zur Federung eines Schienenfahrzeugs verwendet. Das Federsystem eines Schienenfahrzeugs weist oftmals eine sogenannte Primärfederung und eine sogenannte Sekundärfederung auf. Unter der Primärfederung wird zumeist eine Federung zwischen einem ungefederten Radsatz und einem Fahrwerk des Schienenfahrzeugs verstanden. Die Primärfederung dient deshalb beispielsweise dazu, bei einem Schienenfahrzeug mit Rädern aus Metall eine Federung bereitzustellen, die zwischen der Radachse und dem Fahrwerk wirkt. Die Primärfederung weist üblicherweise Material- und/oder formelastische Bauteile, wie beispielsweise Schraubenfedern, Blattfedern oder ähnliche Federn auf. Unter der Sekundärfederung wird zumeist eine Federeinheit verstanden, die zwischen dem Fahrwerk und der Karosserie des Fahrzeugs angeordnet ist und dort wirkt. Die Sekundärfederung kann hierzu beispielsweise eine Luftfeder aufweisen, um einen besseren Komfort für den Karosseriebereich des Schienenfahrzeugs zu bieten. Die Luftfeder weist einen Luftfederbalg auf, der an einer Stirnseite oftmals mit einer Gummifeder gekoppelt ist und dort durch die Gummifeder luftdicht verschlossen ist. An der gegenüberliegenden Seite kann ein Verbindungselement angeordnet sein, um die entsprechende, gegenüberliegende Stirnseite des Luftfederbalgs luftdicht zu verschließen. Dadurch wird ein luftdichter Arbeitsraum gebildet, dessen Innenraum oftmals mit Luft gefüllt ist. Durch die Komprimierbarkeit von Luft und die Dehnbarkeit des Luftfederbalgs gewährleistet der Luftfederbalg eine entsprechende Federwirkung. Da der Luftfederbalg mit der Gummifeder gekoppelt ist, kann die Gesamtfederwirkung sowohl durch die Federwirkung des Luftfederbalgs als auch von der Gummifeder geprägt sein.

Die Gummifeder weist ein Gummimaterial auf, das oftmals auf einem Naturkautschuk und/oder einem Polyisoprenkautschuk basiert. Sollte ein Brand in unmittelbarer Nähe zu der Gummifeder entstehen, so besteht die Gefahr, dass von dem Gummimaterial der Gummifeder dichte Rauchgase freigesetzt werden. Eine bekannte Methode zur Verringerung der Freisetzung von Rauchgasen ist die Einmischung von brandhemmenden Substanzen in das Gummimaterial und so beispielsweise in der WO 2014019008 A1 beschrieben. Allerdings führt das Einmischen dieser Substanzen oftmals dazu, dass die geforderten physikalischen Eigenschaften, insbesondere die Federungs-, Setz- und/oder Schwingungseigenschaften, der Gummifeder verschlechtert werden. Dies ist jedoch zu vermeiden. Eine weitere Methode sieht deshalb vor, dass zunächst das Gummimaterial der Gummifeder hergestellt wird und im Anschluss eine Schicht auf das fertiggestellte Gummimaterial aufgetragen wird, wobei diese Schicht ein Gummimaterial mit eingemischten brandhemmenden Substanzen ist. Diese nachträgliche Aufbringung der Schicht hat jedoch den Nachteil, dass die Herstellung der gesamten Gummifeder aufwändiger wird, mit höheren Kosten verbunden ist, und dass die mechanische Verbindung zwischen der Gummischicht mit brandhemmenden Substanzen und dem innenliegenden übrigen Gummikern nicht sehr fest ausgebildet ist, sodass in einem ungünstigen Fall die Gefahr besteht, dass sich die äußere Schicht von dem inneren Gummikernlöst. Dies ist jedoch zu vermeiden.

Die DE 102014219613 A1 offenbart insbesondere einen Luftfederbalg mit brandhemmenden Eigenschaften, wobei der Luftfederbalg zur Verbesserung der brandhemmenden Eigenschaften mit einem aus einem Textil oder einer Folie ausgebildeten Überzug versehen ist.

Die DE 102015217873 A1 offenbart einen weiteren Aufbau eines Luftfederbalgs mit brandhemmenden Eigenschaften, wobei ein Gewebe oder Gewirke oder Gestrick zur Optimierung der brandhemmenden Eigenschaften in eine Schicht aus elastomerem Material eingebettet ist.

Die EP 2581196 A1 offenbart beispielsweise ein Verfahren zur Herstellung eines Formteils aus Elastomer, wobei das Elastomer durch einen Einlass in eine mehrteilige Form gefüllt und in dieser Form vulkanisiert wird.

Der Erfindung liegt die Aufgabe zugrunde, ein möglichst einfaches, schnelles und kostengünstiges Verfahren zur Herstellung einer brandgeschützten Gummifeder bereitzustellen.

Gelöst wird die Aufgabe durch ein Verfahren gemäß Anspruch 1. Vorgesehen ist also ein Verfahren, das zur Herstellung einer Gummifeder. Das Verfahren weist zumindest die folgenden Schritte a) bis g) auf:
a) Bereitstellen eines Formwerkzeugs, das mehrere Formwerkzeugteile aufweist, wobei das Formwerkzeug ausgebildet ist, sodass das Formwerkzeug zwischen einer Schließstellung, in der die Formwerkzeugteile eine Formkammer umschließen, und einer Öffnungsstellung, in der die Formwerkzeugteile zumindest teilweise voneinander beabstandet sind und dadurch die Formkammer von außen zugänglich ist, verfahrbar ist, und wobei das Formwerkzeug in der geschlossenen Stellung eine die Formkammer umschließende Formfläche bildet, die eine Mehrzahl von Kanalöffnungen aufweist, die jeweils zu Einströmkanälen führen;
b) Verfahren des Formwerkzeugs in die Öffnungsstellung;
c) Einsetzen einer Kopfanschlusseinheit und einer Fußanschlusseinheit in an der Formfläche des Formwerkzeugs ausgebildeten Aufnahmesitze, wobei die Kopfanschlusseinheit zumindest eine Oberplatte umfasst, die zum Befestigen eines Luftfederbalgs ausgebildet ist, und wobei die Fußanschlusseinheit zumindest eine Anschlussplatte umfasst, der zum Befestigen an einem Fahrwerk eins Fahrzeugs ausgebildet ist;
d) Verfahren des Formwerkzeugs in die Schließstellung, wobei die Kanalöffnungen in einem Mantelabschnitt der Formfläche zwischen den Aufnahmesitzen verteilt angeordnet sind;
e) Fördern von einem ersten Gummimaterial durch die Einströmkanäle und die Kanalöffnungen in die Formkammer;
f) Fördern von einem zweiten Gummimaterial durch die Einströmkanäle und die Kanalöffnungen in die Formkammer, nachdem Schritt e) beendet ist, wobei das zweite Gummimaterial Flammschutzmittel enthält; und
g) Gemeinsames Vulkanisieren des ersten und zweiten Gummimaterials, sodass daraus zusammen mit der Kopfanschlusseinheit und der Fußanschlusseinheit eine Gummifeder entsteht.

Das Verfahren unter Verwendung des zuvor erläuterten Formwerkzeugs bietet den Vorteil, dass das Formwerkzeug zwischen den Schritten d) und g) nicht geöffnet werden muss. Insbesondere bedarf es keiner Zwischenfertigung eines Gummifederhalbprodukts mit dem ersten Gummimaterial und einer entsprechenden Vulkanisierung oder Teilvulkanisierung, um anschließend das zweite Gummimaterial außenseitig an der Mantelfläche des ersten Gummimaterials anzubringen. Vielmehr erlaubt das Verfahren zunächst das Einbringen des ersten Gummimaterials in die Formkammer bei geschlossenem Formwerkzeug und anschließend das Einbringen des zweiten Gummimaterials in die Formkammer, sodass sich das zweite Gummimaterial außenseitig um das erste Gummimaterial legt und dadurch eine mantelseitige Schutzschicht bildet. Das zweite Gummimaterial weist Flammschutzmaterial auf. Werden beide Gummimaterialien gleichzeitig vulkanisiert, so entsteht eine besonders feste stoffflüssige Verbindung zwischen dem ersten, vulkanisierten Gummimaterial und dem zweiten, vulkanisierten Gummimaterial. Außerdem ist das innenliegende, erste Gummimaterial durch das zweite Gummimaterial vor einem Brand geschützt. Dies gewährleistet das in das zweite Gummimaterial eingemischte Flammschutzmittel. Indem auf ein Öffnen des Formwerkzeugs zwischen den Schritten d) und g) verzichtet werden kann, kann die Herstellung der Gummifeder besonders schnell und kosteneffizient erfolgen. Außerdem bietet die feste Verbindung zwischen dem ersten und zweiten Gummimaterial eine besonders robuste Ausgestaltung der Gummifeder. Schließlich ist die Gummifeder durch das Flammschutzmittel der Schicht aus dem zweiten Gummimaterial vor einem Brand geschützt. Die Verfahrensschritte a) bis g) des Verfahrens werden vorzugsweise in der zuvor genannten Reihenfolge ausgeführt.

Das Formwerkzeug weist mehrere Formwerkzeugteile auf. So kann das Formwerkzeug beispielsweise zwei, drei, vier oder noch weitere Formwerkzeugteile aufweisen. Die Kanalöffnungen an der Formfläche können von den Formwerkzeugen oder von mehreren der Formwerkzeuge gebildet sein. Jede der Kanalöffnungen führt zu einem Einströmkanal. Die Einströmkanäle können miteinander gekoppelt sein und dadurch einen verzweigten Kanalstrang bilden. Dieser kann zu einem Anschluss führen, über den das erste oder das zweite Gummimaterial in den Kanalstrang gedrückt wird, sodass das jeweilige Gummimaterial durch die entsprechenden Einströmkanäle zu den Kanalöffnungen gelangt. Die Schritte d) und e) können deshalb mittels einer Fördereinheit ausgeführt werden, die mit dem Kanalstrang gekoppelt ist und zum Fördern des ersten und/oder zweiten Gummimaterials ausgebildet ist. Das Verfahren des Formwerkzeugs in die Öffnungsstellung oder in die Schließstellung kann mittels eines mechanischen Antriebs und/oder mithilfe eines Führungssystems erfolgen.

Vorzugsweise ist die von den Formwerkzeugteilen gebildete Formfläche derart ausgebildet, dass zumindest zwei Aufnahmesitze gebildet sind. Jeder Aufnahmesitz kann segmentiert gebildet sein. So kann jeder Aufnahmesitz durch mehrere Segmente gebildet sein, die jeweils von unterschiedlichen Formwerkzeugteilen gebildet sind. Jeder Aufnahmesitz zeichnet sich vorzugsweise dadurch aus, dass der jeweilige Aufnahmesitz gegenüber der Formfläche nach innen in das Material des jeweiligen Formwerkzeugs zurückspringt. Der Aufnahmesitz formt einen Raum, in den die Kopfanschlusseinheit oder die Fußanschlusseinheit eingesetzt werden kann. Dabei wird die Kopfanschlusseinheit bzw. die Fußanschlusseinheit nur mit einem jeweils außenseitigen Ende in den jeweiligen Aufnahmesitz eingesetzt. Dadurch wird ein sicherer Halt der Kopfanschlusseinheit bzw. der Fußanschlusseinheit gegeben. Dies gilt insbesondere dann, wenn das Formwerkzeug in die Schließstellung verfahren ist.

Die Kopfanschlusseinheit weist die Oberplatte auf, die zum Befestigen eines Luftfederbalgs ausgebildet ist. So kann die Kopfanschlusseinheit mittels der Oberplatte und/oder weiterer Bauteile ausgebildet sein, um eine kraftschlüssige und/oder formschlüssige Verbindung zu dem Luftfederbalg herzustellen. Der Luftfederbalg kann ein Luftfederbalg einer Sekundärfeder sein. Die herzustellende Gummifeder kann ebenfalls für diese Sekundärfeder dienen. Das Verfahren kann somit zur Herstellung einer Gummifeder für eine Sekundärfeder eines Schienenfahrzeugs dienen. Die Sekundärfeder kann auch als eine Federeinheit aus einer Kombination der Gummifeder und einer Luftfeder verstanden werden, wobei die Luftfeder den Luftfederbalg und ein Verbindungselement aufweist, das zur Herstellung einer Verbindung zu einer Karosserie eines Fahrzeugs, insbesondere eines Schienenfahrzeugs, ausgebildet ist.

Die Fußanschlusseinheit der Gummifeder weist zumindest die Anschlussplatte auf, die zum Befestigen der Gummifeder an einem Fahrwerk eines Fahrzeugs ausgebildet ist. So kann die Anschlussplatte beispielsweise zum Befestigen an einem Fahrwerk eines Schienenfahrzeugs ausgebildet sein. Dies ist insbesondere dann von Vorteil, wenn die Gummifeder für die Sekundärfeder des Schienenfahrzeugs verwendet werden soll.

Ist das Formwerkzeug in die Schließstellung verfahren, kann ein Mantelabschnitt der Formfläche bestimmt werden, der sich zwischen den Aufnahmesitzen erstreckt. Dieser Mantelabschnitt erstreckt sich also von einem Aufnahmesitz ausgehend bis zu dem anderen Aufnahmesitz. Von dem Mantelabschnitt der Formfläche wird deshalb auch die Mantelfläche des Gummimaterials geprägt, das zwischen der Kopfanschlusseinheit und der Fußanschlusseinheit einzubringen ist. Die Kopfanschlusseinheit und die Fußanschlusseinheit sind jeweils vorzugsweise derart ausgebildet, dass sie die herzustellende Gummifeder ober- und unterseitig abschließen. So können die Kopfanschlusseinheit und die Fußanschlusseinheit jeweils geschlossen ausgebildet sein, sodass an der Ober- und Unterseite der Gummifeder kein Gummimaterial von außen zugänglich ist. Das bedeutet jedoch nicht, dass die Kopfanschlusseinheit und die Fußanschlusseinheit jeweils einteilig ausgebildet sein müssen. Vielmehr kann jede der beiden zuvor genannten Einheiten auch mehrteilig ausgebildet sein.

Die Kanalöffnungen sind über den Mantelabschnitt der Formfläche zwischen den Aufnahmesitzen verteilt angeordnet. Durch die Mehrzahl der Kanalöffnungen kann gewährleistet werden, dass Gummimaterial nicht nur punktuell sondern flächig verteilt durch die Kanalöffnungen in die Formkammer eingedrückt werden kann. Es ist deshalb vorgesehen, dass zunächst das erste Gummimaterial durch die Einströmkanäle und die Kanalöffnungen in die Formkammer des Formwerkzeugs zwischen die Kopfanschlusseinheit und die Fußanschlusseinheit gefördert wird, während das Formwerkzeug in der Schließstellung ist. Das erste Gummimaterial kann dazu mittels der Fördereinheit gefördert werden. Ist eine vorbestimmte und/oder ausreichende Menge an erstem Gummimaterial in die Formkammer gefördert worden, kann im Anschluss ohne die Formkammer zwischenzeitlich zu öffnen, das zweite Gummimaterial durch die Einströmkanäle oder die Kanalöffnungen in die Formkammer zwischen die Kopfanschlusseinheit und die Fußanschlusseinheit gefördert werden. Das zweite Gummimaterial kann ebenfalls mittels der Fördereinheit gefördert werden. Aufgrund der Verteilung der Kanalöffnungen und der Mehrzahl der Kanalöffnungen kann gewährleistet werden, dass das in die Formkammer geförderte, zweite Gummimaterial sich außenseitig zu dem ersten, in der Förderkammer befindlichen, Gummimaterial und an dem Mantelabschnitt der Formfläche verteilt, sodass durch das in die Formkammer geförderte, zweite Gummimaterial eine Schicht aus zweitem Gummimaterial entsteht, die sich mantelseitig um das erste Gummimaterial ringförmig erstreckt und sich außerdem zwischen der Kopfanschlusseinheit und der Fußanschlusseinheit erstreckt. Dadurch kann also eine mantelseitige, abgeschlossene Beschichtung aus zweitem Gummimaterial um das innen angeordnete, erste Gummimaterial entstehen. Die derart in die Formkammer eingebrachten Gummimaterialien werden im Anschluss in einem gemeinsamen Schritt vulkanisiert, sodass aus den vulkanisierten Gummimaterialien, der Kopfanschlusseinheit und der Fußanschlusseinheit die Gummifeder entsteht. Die Vulkanisierung kann mit einer Vulkanisierungsvorrichtung erfolgen, die zum Erwärmen und gleichzeitigen Erhöhen des Umgebungsdrucks ausgebildet ist. Das Formwerkzeug kann dazu in einen Arbeitstrum der Vulkanisierungsvorrichtung gebracht werden, sodass die Erwärmung und Druckausübung auf die Formkammer zumindest indirekt wirken kann. Durch die gemeinsame Vulkanisierung weisen die beiden vulkanisierten Gummimaterialien eine besonders feste, stoffflüssige Verbindung zueinander auf. Außerdem ist das erste, vulkanisierte Gummimaterial durch das zweite, vulkanisierte Gummimaterial vor einem Brand geschützt. Schließlich bieten die zuvor erläuterten Verfahrensschritte eine besonders schnelle Herstellung und damit auch eine besonders kosteneffiziente Herstellung der Gummifeder.

Eine vorteilhafte Ausgestaltung des Verfahrens zeichnet sich durch die folgenden, weiteren Schritte auf:
h) Verfahren des Formwerkzeugs in die Öffnungsstellung; und
i) Entnehmen der Gummifeder aus der Formkammer.

Die Schritte h) und i) werden nacheinander ausgeführt, wobei Schritt h) im Anschluss an Schritt g) des Verfahrens ausgeführt wird. Wie bereits zuvor erläutert, ist es bevorzugt vorgesehen, dass das Formwerkzeug beginnend mit Schritt e) bis zum Ende von Schritt g) ununterbrochen in der Schließstellung verbleibt. Somit wird das Formwerkzeug nach dem Vulkanisieren in Schritt h) geöffnet, um Zugang zu der Formkammer zu erhalten. Gemäß Schritt i) wird die Gummifeder aus der Formkammer entnommen. Diese Gummifeder kann sodann verwendet werden, um zusammen mit einem Gummibalg eine Luftfedereinheit zu bilden, die insbesondere als Sekundärfeder für ein Schienenfahrzeug dient.

Eine weitere vorteilhafte Ausgestaltung des Verfahrens zeichnet sich dadurch aus, dass das erste Gummimaterial frei von Flammschutzmittel ist. In der Praxis wurde festgestellt, dass das Einmischen von Flammschutzmittel die physikalischen Federeigenschaften von vulkanisiertem Gummimaterial nachteilig beeinflussen kann. Insbesondere kann ein Flammschutzmittel dazu führen, dass eine Federrate, die Lebensdauer und/oder die Sprödigkeit von vulkanisiertem Gummimaterial verschlechtert wird. Dies ist jedoch zu vermeiden. Deshalb ist es bevorzugt vorgesehen, dass das erste Gummimaterial frei von Flammschutzmittel ist. Dadurch kann gewährleistet werden, dass das vulkanisierte, erste Gummimaterial der Gummifeder die gewünschten Federeigenschaften der Gummifeder gewährleistet. Zwar kann auch das vulkanisierte, zweite Gummimaterial einen kleinen Einfluss auf die Federeigenschaften der Gummifeder haben. Maßgeblich für die Federeigenschaft der Gummifeder ist jedoch bevorzugt das erste, vulkanisierte Gummimaterial der Gummifeder.

Eine weitere vorteilhafte Ausgestaltung des Verfahrens zeichnet sich dadurch aus, dass es sich bei dem ersten Gummimaterial um eine erste Kautschukmischung handelt, die wenigstens eine Kautschukkomponente enthält. Als Kautschukkomponenten sind insbesondere zu nennen: Ethylen-Propylen-Kautschuk (EPM), Ethylen-Propylen-DienKautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), StyrolButadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM) und/oder Chlorsulfoniertes Polyethylen (CSM). Die vorgenannten Kautschuktypen können unverschnitten sein. Auch der Einsatz eines Verschnittes, insbesondere in Verbindung mit einem der vorgenannten Kautschuktypen, beispielsweise ein Verschnitt von einem Naturkautschuk (NR) und einem Polyisoprenkautschuk (IR) als sogenannter NR/IR-Verschnitt, NR/BR-Verschnitt oder ein BR/SBR-Verschnitt, ist möglich.

Vorzugsweise enthält die erste Kautschukmischung außerdem mindestens eine weitere Mischungsingredienzie. Als Mischungsingredienzien sind zu nennen: Vernetzer, Vernetzungssystem, die ein Vernetzungsmittel und einen Beschleuniger umfassen, Füllstoff, Verarbeitungshilfsmittel, Weichmacher, Alterungsschutzmittel, und/oder Farbpigmente.

Eine weitere vorteilhafte Ausgestaltung des Verfahrens zeichnet sich dadurch aus, dass es sich bei dem zweiten Gummimaterial um eine erste Kautschukmischung handelt, die wenigstens eine Kautschukkomponente enthält. Als Kautschukkomponenten sind insbesondere zu nennen: Ethylen-Propylen-Kautschuk (EPM), Ethylen-Propylen-DienKautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), StyrolButadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM) und/oder Chlorsulfoniertes Polyethylen (CSM). Die vorgenannten Kautschuktypen können unverschnitten sein. Auch der Einsatz eines Verschnittes, insbesondere in Verbindung mit einem der vorgenannten Kautschuktypen, beispielsweise ein Verschnitt von einem Naturkautschuk (NR) und einem Polyisoprenkautschuk (IR) als sogenannter NR/IR-Verschnitt, NR/BR-Verschnitt oder ein BR/SBR-Verschnitt, ist möglich.

Vorzugsweise enthält die zweite Kautschukmischung außerdem mindestens eine weitere Mischungsingredienzie. Als Mischungsingredienzien sind zu nennen: Vernetzer, Vernetzungssystem, die ein Vernetzungsmittel und einen Beschleuniger umfassen, Füllstoff, Verarbeitungshilfsmittel, Weichmacher, Alterungsschutzmittel, und/oder Farbpigmente.

Das zweite Gummimaterial und/oder die zweite Kautschukmischung enthält zusätzlich wenigstens ein Flammschutzmittel. Bevorzugt handelt es sich hierbei um ein halogenfreies Flammschutzmittel oder um eines, was einen möglichst niedrigen Halogenanteil besitzt, damit im Brandfall die Menge an toxischen Rauchgasen niedrig ist. Besonders bevorzugt enthält das zweite Gummimaterial und/oder die zweit Kautschukmischung mindestens eines der folgenden Flammschutzmittel: Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, Antimontrioxid, Mikrohohlkugeln, bevorzugt in nicht-expandierter Form, und/oder Blähgraphit. Die Flammschutzmittel können alleine oder in Kombination verwendet werden.

Eine weitere vorteilhafte Ausgestaltung des Verfahrens zeichnet sich dadurch aus, dass das erste Gummimaterial thermoplastfrei ist. Vielmehr ist es bevorzugt vorgesehen, dass das erste Gummimaterial als ein polymerer Wirkstoff mit elastischen Eigenschaften ausgestaltet ist.

Eine weitere vorteilhafte Ausgestaltung des Verfahrens zeichnet sich dadurch aus, dass das zweite Gummimaterial thermoplastfrei ist. Vielmehr ist es bevorzugt vorgesehen, dass das zweite Gummimaterial als ein polymerer Wirkstoff mit elastischen Eigenschaften ausgebildet ist.

Eine weitere vorteilhafte Ausgestaltung des Verfahrens zeichnet sich dadurch aus, dass das Formwerkzeug mehr als 50 Kanalöffnungen, mehr als 100 Kanalöffnungen oder mehr als 150 Kanalöffnungen aufweist. Die Anzahl der Kanalöffnungen kann von der Größe der Formfläche abhängen. Umso größer die Formfläche ist, desto mehr Kanalöffnungen können vorgesehen sein. Umgekehrt ist es jedoch auch möglich, dass der Querschnitt jeder Kanalöffnung klein gewählt ist, sodass auch bei einer kleinen Formfläche eine große Anzahl von Kanalöffnungen vorgesehen sein kann. Durch die große Anzahl der Kanalöffnungen kann gewährleistet werden, dass das erste Gummimaterial und/oder das zweite Gummimaterial über dem Mantelabschnitt der Formfläche verteilt in den Teil der Formkammer eingebracht werden kann, der zwischen der Kopfanschlusseinheit und der Fußanschlusseinheit ist.

Eine weitere vorteilhafte Ausgestaltung des Verfahrens zeichnet sich dadurch aus, dass mindestens 10 Kanalöffnungen je dm² Formfläche zwischen den Aufnahmesitzen ausgebildet sind. Deshalb können je Flächeneinheit dm² der Formfläche, die zwischen den Aufnahmesitzen von der Formfläche gebildet ist, jeweils 10 Kanalöffnungen oder sogar mehr als 10 Kanalöffnungen ausgebildet sein. Dadurch wird eine besonders gute Verteilung der Kanalöffnungen über die gesamte Fläche der Formfläche zwischen den Aufnahmesitzen erreicht. Die Kanalöffnungen können gleichmäßig oder zumindest im Wesentlichen gleichmäßig verteilt über die Formfläche zwischen den Aufnahmesitzen angeordnet sein. Dies erlaubt ein besonders gleichmäßiges und/oder quasi flächiges Eindringen von dem ersten und/oder zweiten Gummimaterial in die Formkammer zwischen der Kopfanschlusseinheit und der Fußanschlusseinheit.

Eine weitere vorteilhafte Ausgestaltung des Verfahrens zeichnet sich dadurch aus, dass jede Kanalöffnung zu jeder benachbarten Kanalöffnung einen Abstand von weniger als 15 mm, weniger als 10 mm oder weniger als 3 mm aufweist. Durch den geringen Abstand zwischen zwei benachbarten Kanalöffnungen, was in entsprechender Weise für jedes Paar von benachbarten Kanalöffnungen gilt, kann gewährleistet werden, dass eine besonders gleichmäßige Verteilung der Kanalöffnungen über die gesamte Formfläche zwischen den Aufnahmesitzen bzw. zwischen der Kopfanschlusseinheit und der Fußanschlusseinheit erreicht wird, sodass das erste und/oder zweite Gummimaterial besonders gleichmäßig und/oder quasi flächig in den Formraum zwischen der Kopfanschlusseinheit und der Fußanschlusseinheit eingebracht werden kann. Dies ist insbesondere für Schritt f) von Vorteil, da damit eine mantelseitige Schicht aus zweitem Gummimaterial um das erste Gummimaterial erstellt werden kann. Dadurch kann ein besonders effizienter Brandschutz für die Gummifeder erreicht werden.

Eine weitere vorteilhafte Ausgestaltung des Verfahrens zeichnet sich dadurch aus, dass die Kanalöffnungen zwischen den Aufnahmesitzen zumindest im Wesentlichen gleichmäßig verteilt angeordnet sind. Durch die gleichmäßige Verteilung der Kanalöffnungen kann eine Schicht aus zweitem Gummimaterial außenseitig zu dem ersten Gummimaterial in Schritt f) erreicht werden, wobei diese Schicht aus dem zweiten Gummimaterial vorzugsweise eine zumindest im Wesentlichen konstante Schichtdicke oder eine Schichtdicke mit einer Varianz von weniger als 15 % aufweist. Dadurch kann gewährleistet werden, dass keine Lücken und/oder Unterbrechungsstellen in der Schicht aus zweitem Gummimaterial entstehen, die anderenfalls die Gefahr bieten würden, dass das erste Gummimaterial direkt von außen zugänglich wäre. Durch die zumindest im Wesentlichen gleichmäßige Verteilung der Kanalöffnungen wird dies jedoch effektiv verhindert. Denn das zweite Gummimaterial wird durch die Kanalöffnungen mit einer entsprechenden Verteilung in den Formraum zwischen den Aufnahmesitzen bzw. der Kopfanschlusseinheit und der Fußanschlusseinheit eingebracht, sodass vorzugsweise eine zumindest im Wesentlichen ununterbrochene und/oder lückenfreie und/oder geschlossene Schicht aus zweitem Gummimaterial entsteht, die mantelseitig auf dem ersten Gummimaterial sitzt und sich außerdem von einer Unterseite der Kopfanschlusseinheit zu einer Oberseite der Fußanschlusseinheit erstreckt. Damit kann gewährleistet werden, dass das erste Gummimaterial von außen nicht zugänglich ist. Mithilfe der Schicht aus zweitem Gummimaterial kann deshalb ein besonders effektiver Brandschutz für das erste Gummimaterial gebildet werden.

Eine weitere vorteilhafte Ausgestaltung des Verfahrens zeichnet sich dadurch aus, dass das zweite Gummimaterial in Schritt f) gleichzeitig durch alle Kanalöffnungen in die Formkammer gedrückt wird, sodass eine Schutzschicht aus dem zweiten Gummimaterial entsteht, die das in Schritt e) zwischen der Kopfanschlusseinheit und der Fußanschlusseinheit eingedrückte, erste Gummimaterial mantelseitig vollständig umhüllt. Dazu kann ein Kanalstrang und/oder der Durchmesser der Einströmkanäle derart angepasst sein, sodass das von der Fördereinheit in und durch den Kanalstrang geförderte, zweite Gummimaterial gleichzeitig durch alle Kanalöffnungen in den Formraum gedrückt wird. Dadurch wird effektiv verhindert, dass das erste Gummimaterial von außen zugänglich ist. Denn mantelseitig verhindert die Schutzschicht aus zweitem Gummimaterial, dass das erste Gummimaterial seitlich zugänglich ist. Von oben und unten verhindern die Kopfanschlusseinheit bzw. die Fußanschlusseinheit, dass das erste Gummimaterial von außen frei zugänglich ist. Die in Schritt g) entstehende Gummifeder bietet deshalb einen besonders guten Brandschutz. Denn die Kopfanschlusseinheit und die Fußanschlusseinheit sind oftmals aus brandgeschütztem Material, wie beispielsweise Metall. Die Schutzschicht aus dem zweiten Gummimaterial, das in Schritt g) vulkanisiert ist, bietet ebenfalls einen Brandschutz durch das Flammschutzmittel. Dadurch kann ein effektiver Brandschutz für das erste Gummimaterial und somit ein effektiver Brandschutz für die gesamte Gummifeder erreicht werden.

Eine weitere vorteilhafte Ausgestaltung des Verfahrens zeichnet sich dadurch aus, dass in Schritt e) eine erste, vorbestimmte Menge an erstem Gummimaterial in die Formkammer gefördert wird. Hierzu kann die Fördereinheit entsprechend ausgebildet sein. Durch eine Steuerung der Fördereinheit, die zum Fördern des ersten Gummimaterials vorgesehen ist, kann beispielsweise die erste, vorbestimmte Menge an dem ersten Gummimaterial in die Förderkammer gefördert werden. Es ist jedoch alternativ oder ergänzend auch möglich, dass in den Ventilstrang ein integriertes Ventil vorgesehen ist, das derart gesteuert wird, dass die erste, vorbestimmte Menge an erstem Gummimaterial in die Formkammer gefördert wird. Die erste, vorbestimmte Menge kann sich auf ein Volumen und/oder Gewicht des ersten Gummimaterials beziehen. Vorzugsweise ist mit der ersten, vorbestimmten Menge ein erstes, vorbestimmtes Volumen an dem ersten Gummimaterial gemeint.

Eine weitere vorteilhafte Ausgestaltung des Verfahrens zeichnet sich dadurch aus, dass die erste, vorbestimmte Menge das Volumen der Förderkammer zwischen der Kopfanschlusseinheit und der Fußanschlusseinheit bis auf ein vorbestimmtes Restvolumen füllt. Dies bezieht sich insbesondere auf ein Restvolumen, das nachbleibt, wenn Schritt e) vollständig ausgeführt ist. Das Restvolumen bietet den Vorteil, dass dieses mit dem zweiten Gummimaterial in Schritt f) gefüllt werden kann.

Eine weitere vorteilhafte Ausgestaltung des Verfahrens zeichnet sich dadurch aus, dass in Schritt f) eine zweite, vorbestimmte Menge an zweitem Gummimaterial in die Formkammer gefördert wird, sodass der Teil der Formkammer zwischen der Kopfanschlusseinheit und der Fußanschlusseinheit vollständig von dem ersten und dem zweiten Gummimaterial gefüllt ist. Hierzu kann die Fördereinheit entsprechend ausgebildet sein und/oder das Ventil entsprechend gesteuert sein. In Schritt f) wird das zweite Gummimaterial über die vorzugsweise verteilt angeordneten Kanalöffnungen in die Formkammer im Bereich zwischen dem Kopfanschlusseinheit und der Fußanschlusseinheit gefördert, sodass eine mantelseitige Schicht aus zweitem Gummimaterial entsteht, die das erste Gummimaterial mantelseitig umschließt. Indem die zweite, vorbestimmte Menge vorzugsweise derart gewählt ist, dass der Teil der Formkammer zwischen dem Kopfanschlussteil und dem Fußanschlussteil vollständig geführt ist, kann gewährleistet werden, dass die gewünschten Federeigenschaften der herzustellenden Gummifeder erreicht werden und zugleich ein Brandschutz gewährleistet wird.

Eine weitere vorteilhafte Ausgestaltung des Verfahrens zeichnet sich dadurch aus, dass die zweite Menge dem Restvolumen entspricht. Die zweite Menge an zweitem Gummimaterial entspricht also dem Restvolumen, das die Formkammer noch aufweist, nachdem in Schritt e) die erste, vorbestimmte Menge an erstem Gummimaterial in die Formkammer gefördert wurde. Durch diese Abstimmung der Menge an Gummimaterialien können Gummifedern wiederholt mit gleichen physikalischen Eigenschaften hergestellt werden. Mit anderen Worten kann eine hohe Reproduzierbarkeit der Gummifeder gewährleistet werden.

Eine weitere vorteilhafte Ausgestaltung des Verfahrens zeichnet sich dadurch aus, dass das Flammschutzmittel halogenfrei ist.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt einen Teil eines Schienenfahrzeugs in einer schematischen Seitenansicht.
- Fig. 2: zeigt eine vorteilhafte Ausgestaltung einer Sekundärfederung in einer schematische Querschnittsansicht.
- Fig. 3: zeigt eine vorteilhafte Ausgestaltung eines geöffneten Formwerkzeugs in einer schematischen Ansicht.
- Fig. 4 und 5: zeigen das Formwerkzeug aus Fig. 3 jeweils in einer Schließstellung.
- Fig. 6: zeigt eine vorteilhafte Ausgestaltung der Gummifeder in einer schematischen Querschnittsansicht.
- Fig. 7 und 8: zeigen Ablaufpläne von vorteilhaften Ausgestaltungen des Verfahrens.

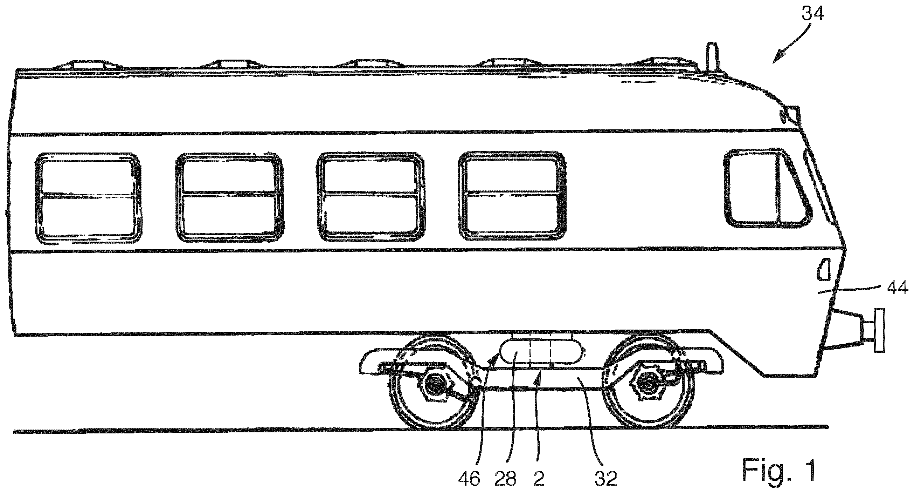

Figur 1 zeigt einen Teil eines Fahrzeugs 34, nämlich einen Schienenfahrzeugs, in einer schematischen Seitenansicht. Das Schienenfahrzeug 34 wird hierbei exemplarisch durch einen Teil eines Kurzstreckentriebwagens repräsentiert. Das Schienenfahrzeug 34 weist ein Fahrwerk 32 auf. Das Fahrwerk 32 wird oftmals auch als Fahrgestell bezeichnet.

Außerdem weist das Schienenfahrzeug 34 eine Karosserie 44 auf. Die Karosserie 44 wird auch als Aufbau des Schienenfahrzeugs 34 bezeichnet.

In der Figur 1 ist außerdem eine Schienenfahrzeugfederung 46 schematisch dargestellt. Die Schienenfahrzeugfederung 46 ist zwischen der Karosserie 44 des Schienenfahrzeugs 34 und dem Fahrwerk 32 des Schienenfahrzeugs 34 angeordnet. Somit ist die Karosserie 44 mittels der Schienenfahrzeugfederung 46 mit dem Fahrwerk 32 verbunden. Die Schienenfahrzeugfederung 46 kann deshalb auch einen Teil des Schienenfahrzeugs 34 bilden.

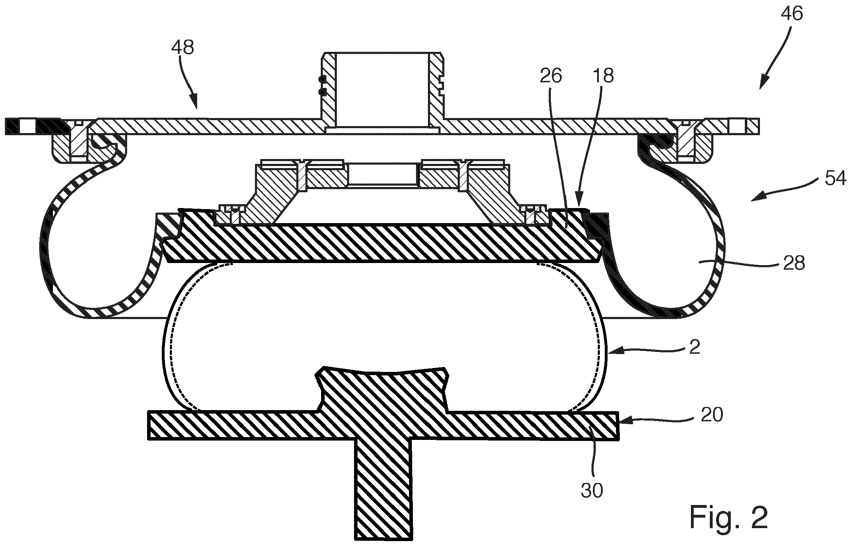

In der Figur 2 ist eine exemplarische Ausgestaltung der Schienenfahrzeugfederung 46 in einer schematischen Querschnittsansicht gezeigt. Die Schienenfahrzeugfederung 46 weist eine Luftfeder 54 mit einem Luftfederbalg 28 und einer Verbindungsplatte 48 auf. Der Luftfederbalg 28 ist im Wesentlichen tubusförmig. Ein ringförmiges Verbindungsende des Luftfederbalgs 28 ist mit der Verbindungsplatte 48 verbunden. Das andere ringförmige Ende des Luftfederbalgs 28 ist mit einer Kopfanschlusseinheit 18 einer Gummifeder 2 verbunden. Zusammen können die Gummifedern 2 und die Luftfeder 54 die Schienenfahrzeugfederung 46 bilden.

Der Aufbau und die Funktion der Luftfeder 54 und der Gummifeder 2 und deshalb auch der Schienenfahrzeugfeder 46 sind grundsätzlich aus dem Stand der Technik bekannt. Auf eine weitergehende Erörterung der Funktionsweise der Luftfeder 54, der Gummifeder 2 und/oder der Schienenfahrzeugfeder 46 soll deshalb nicht weiter eingegangen werden.

Zu berücksichtigen ist jedoch, dass ein erhöhter Bedarf an Brandschutz für die Gummifeder 2 festgestellt wurde. Um diesen Brandschutz zu gewährleisten, ist es vorgesehen, dass das Gummimaterial der Gummifeder 2 vor einem Brand geschützt ist. Dies wird einerseits durch eine äußere Gummischicht mit Flammschutzmittel sowie durch die stirnseitige Anordnung der Kopfanschlusseinheit 18 und der Fußanschlusseinheit 20 gewährleistet.

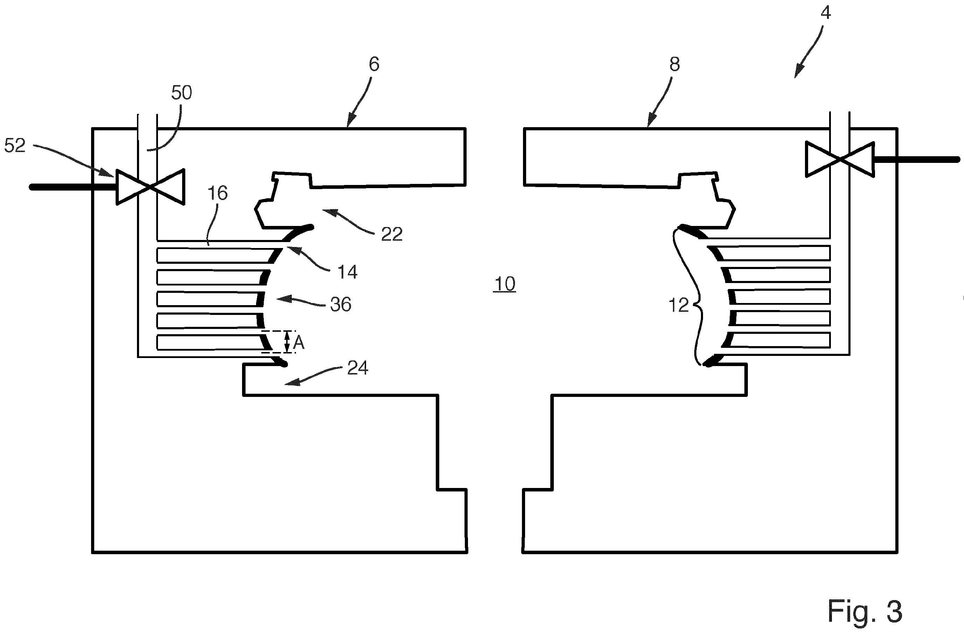

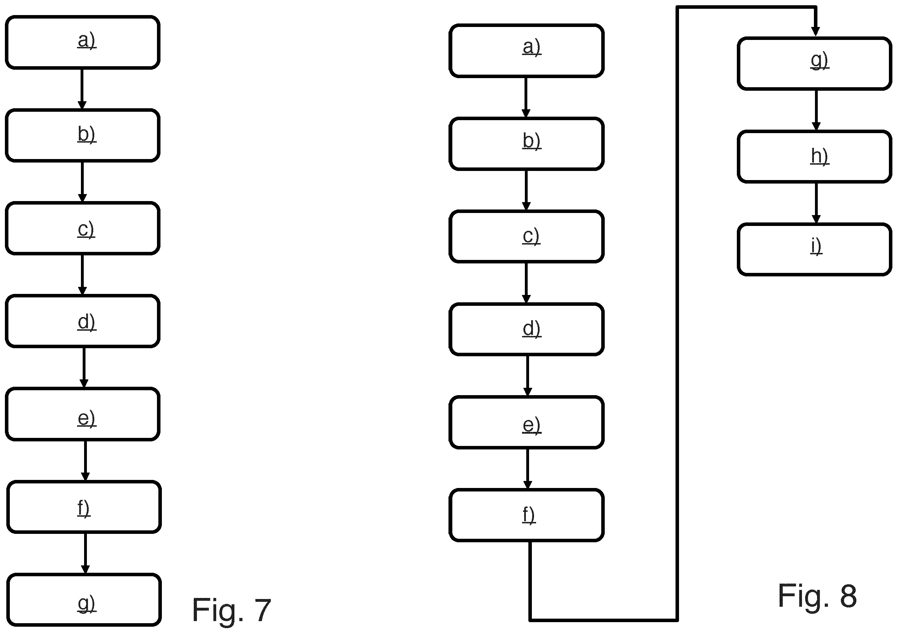

Um den Aufwand, die Kosten und zugleich die mechanischen Federeigenschaften sowie den Brandschutz für die Gummifeder 2 zu gewährleisten, ist es erfindungsgemäß vorgesehen, dass die Gummifeder 2 gemäß einem Verfahren nach Anspruch 1 hergestellt wird. Ein entsprechender Ablaufplan ist in Figur 7 schematisch dargestellt. Ein weiterer Ablaufplan einer vorteilhaften Ausgestaltung des Verfahrens ist in Fig. 8 schematisch dargestellt. Unter Bezugnahme auf die Figuren 3 bis 6 werden im Folgenden die Verfahrensschritte näher erläutert.

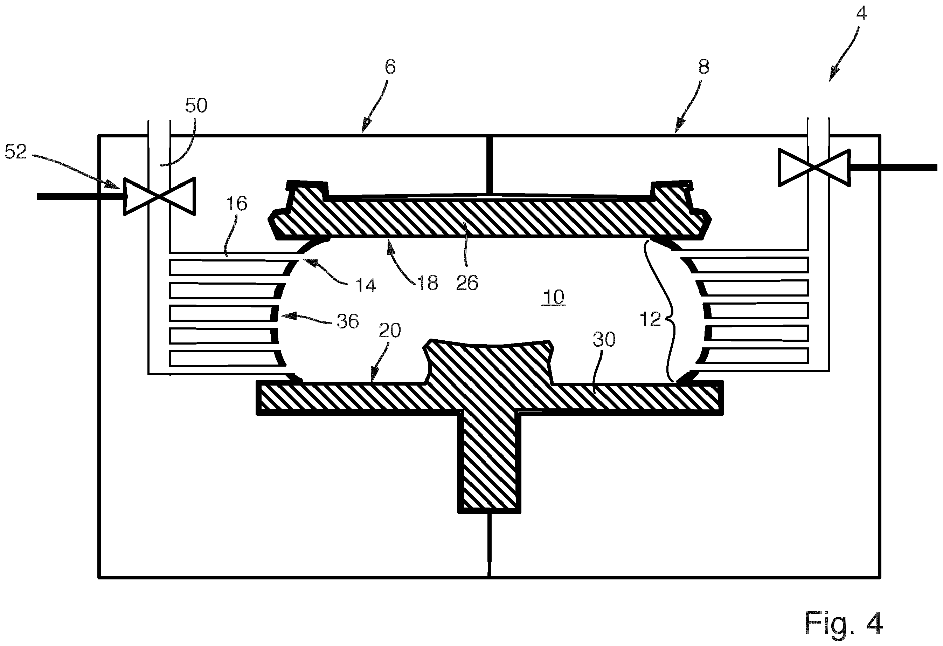

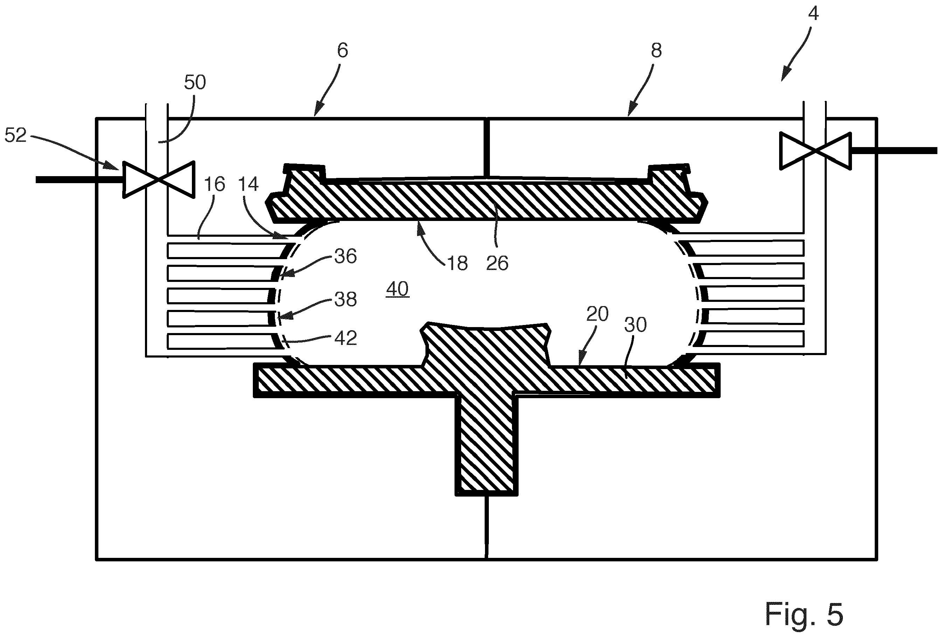

Gemäß Schritt a) des Verfahrens wird zunächst das Bereitstellen eines Formwerkzeugs 4 vorgesehen. Das Formwerkzeug 4 weist mehrere Formwerkzeugteile 6, 8 auf. Rein exemplarisch ist in den Figuren 3 bis 5 ein Formwerkzeug 4 mit einem ersten Formwerkzeugteil 6 und einem zweiten Formwerkzeugteil 8 dargestellt. Grundsätzlich kann das Formwerkzeug 4 jedoch noch weitere Formwerkzeugteile aufweisen. Außerdem können die Formwerkzeugteile 6, 8 zumindest teilweise eine andere Gestalt und/oder Form aufweisen. Das Formwerkzeug 4 ist ausgebildet, sodass das Formwerkzeug 4 zwischen einer Schließstellung und einer Öffnungsstellung verfahrbar ist. In der Figur 3 ist die Öffnungsstellung des Formwerkzeugs 4 dargestellt. In den Figuren 4 und 5 ist jeweils das Formwerkzeug 4 in einem Schließzustand dargestellt. Die Formwerkzeugteile 6, 8 des Formwerkzeugs 4 können durch eine Führung und/oder durch einen anderen Mechanismus derart verfahrbar sein, dass die Formwerkzeugteile 6, 8 relativ zueinander verfahrbar sind und/oder in der Schließstellung eine vorbestimmte Position zueinander aufweisen. Dies ist jedoch nicht zwingend notwendig. Es gibt auch andere Möglichkeiten und/oder Mittel, um die Formwerkzeugteile 6, 8 in einer vorbestimmten Ausrichtung zueinander in der Schließstellung zu platzieren. In der Öffnungsstellung, wie sie beispielhaft in Figur 3 dargestellt ist, sind die Formwerkzeugteile 6, 8 zumindest teilweise voneinander beabstandet, sodass dadurch die Formkammer 10 von außen zugänglich ist. Bei dem in Figur 3 dargestellten Beispiel des Formwerkzeugs 4 ist das erste Formwerkzeug 6 von dem zweiten Formwerkzeug 8 beabstandet, sodass die Formkammer 10 von außen durch den entsprechenden Spalt zwischen den beiden Formwerkzeugen 6, 8 zugänglich ist. Der Abstand kann in der Praxis deutlich größer gewählt werden, als es in Figur 3 dargestellt ist. Das Öffnen und Schließen des Formwerkzeugs kann mittels eines Antriebs erfolgen, der mit dem Formwerkzeug gekoppelt sein kann.

In der geschlossenen Stellung liegen die Formwerkzeugteile 6, 8 des Formwerkzeugs 4 derart aneinander an, dass eine zumindest im Wesentlichen geschlossene Formkammer 10 gebildet wird, die von den Formwerkzeugen 6, 8 umschlossen ist und dadurch eine die Formkammer 10 umschließende Formfläche 12 bildet. Das Formwerkzeug 4 in der beispielhaften Ausgestaltung aus den Figuren 3 bis 5 weist zwei spiegelsymmetrisch ausgebildete Formwerkzeugteile 6, 8 auf. Die Bezugszeichen von den beiden Formwerkzeugteilen 6, 8 können deshalb in analoger Weise für das jeweils andere Formwerkzeug gelten. Um eine bessere Übersicht zu gewährleisten, wird von einer doppelten Bezeichnung durch die Bezugszeichen abgesehen.

Die Formfläche 12 des Formwerkzeugs 4 kann somit segmentiert ausgebildet sein. Denn die Formfläche 12 kann zum Teil durch das erste Formwerkzeugteil 6 und zum anderen Teil durch das zweite Formwerkzeugteil 8 gebildet sein. An der Formfläche 12 sind außerdem Aufnahmesitze 22, 24 ausgebildet. So ist es bevorzugt vorgesehen, dass ein erster Aufnahmesitz 22 und ein zweiter Aufnahmesitz 24 vorgesehen sind, wobei die beiden Aufnahmesitze 22, 24 an gegenüberliegenden Seiten der Formkammer 10 durch entsprechende Rücksprünge in der Formfläche 12 gebildet sind. Jede der Aufnahmesitze 22, 24 kann als eine ringförmige Nut, die insbesondere segmentiert ist, ausgebildet sein. Der erste Aufnahmesitz 22 ist vorzugsweise zur Aufnahme und zum formschlüssigen Halten einer Kopfanschlusseinheit 18 ausgebildet. Der zweite Aufnahmesitz 24 ist vorzugsweise zur Aufnahme und zum formschlüssigen Halten einer Fußanschlusseinheit 20 ausgebildet. Die genannte Mehrzahl von Kanalöffnungen 14 ist in einem Mantelabschnitt 36 der Formfläche 12 verteilt angeordnet, wobei sich der Mantelabschnitt 36 der Formfläche 12 zwischen dem ersten Aufnahmesitz 22 und dem zweiten Aufnahmesitz 24 erstreckt. Bevorzugt ist es vorgesehen, dass eine große Mehrzahl von Kanalöffnungen 14, insbesondere mehr als 50 Kanalöffnungen, mehr als 100 Kanalöffnungen oder mehr als 150 Kanalöffnungen, in dem Mantelabschnitt 36 der Formfläche 12 zwischen den Aufnahmesitzen 22, 24 verteilt angeordnet sind. So kann es beispielsweise vorgesehen sein, dass je Flächeneinheit dm² der Formfläche 12 im Mantelabschnitt 36 mindestens 10 Kanalöffnungen 14 verteilt angeordnet sind. Es kann alternativ oder ergänzend vorgesehen sein, dass der Abstand A jeder Kanalöffnung 14 zu der jeweils benachbarten Kanalöffnung 14 weniger als 15 mm, weniger als 10 mm oder weniger als 3 mm beträgt. Der Durchmesser jeder Kanalöffnung 14 kann besonders klein gewählt sein. So kann der Durchmesser jeder Kanalöffnung 14 kleiner als 5 mm, kleiner als 3 mm oder kleiner als 1,5 mm sein. Schritt b) kann mittels des (nicht dargestellten) Antriebs erfolgen.

Nachdem das Formwerkzeug 4 in Schritt a) bereitgestellt wurde, ist es vorgesehen, dass das Formwerkzeug 4 in Schritt b) in die Öffnungsstellung verfahren wird. Dies ist beispielhaft in der Figur 3 dargestellt.

Nachdem das Formwerkzeug in die Öffnungsstellung verfahren wurde, ist es nach einer vorteilhaften Ausgestaltung des Schritts c) vorgesehen, dass die Kopfanschlusseinheit 18 in den ersten Aufnahmesitz 22 und die Fußanschlusseinheit 20 in den zweiten Aufnahmesitz 24 eingesetzt wird. Dies kann mittels eines (nicht dargestellten) Roboters erfolgen. Daraufhin wird das Formwerkzeug 4 in Schritt d) des Verfahrens in die Schließstellung verfahren, sodass das Formwerkzeug 4 wie beispielhaft in der Figur 4 dargestellt, eine geschlossene Formkammer 10 bildet, in der die Kopfanschlusseinheit 18 und die Fußanschlusseinheit 20 angeordnet sind. Schritt d) kann mittels des Antriebs erfolgen. Da die Kanalöffnungen 14 in dem Mantelabschnitt 36 der Formfläche 12 verteilt angeordnet sind, und sich der Mantelabschnitt 36 zwischen den Aufnahmesitzen 22, 24 und somit auch zwischen der Kopfanschlusseinheit 18 und der Fußanschlusseinheit 20 erstreckt, ist es möglich, dass ein erstes oder ein zweites Gummimaterial durch die Einströmkanäle 16 und die Kanalöffnungen 14 in den Teil der Formkammer 10 gefördert wird, der zwischen der Kopfanschlusseinheit 18 und der Fußanschlusseinheit 20 gebildet ist. Das Fördern kann mittels der (nicht dargestellten) Fördereinheit erfolgen.

Zu jeder der Kanalöffnungen 14 erstreckt sich ein Einströmkanal 16. Die Einströmkanäle 16 können miteinander gekoppelt sein, sodass durch die Einströmkanäle 16 ein verteilter Kanalstrang entsteht, der eine Zugangsleitung 50 und eine von dieser Zugangsleitung 50 abgehende Mehrzahl von Einströmkanälen 16 aufweist. Rein beispielhaft ist in den Figuren 3 bis 5 außerdem ein Ventil 52 gezeigt, das in den Zugangskanal 50 derart integriert ist, sodass ein Öffnen oder Schließen des Zugangskanals 50 über das Ventil 52 möglich ist. Das Ventil 52 ist jedoch nur optional.

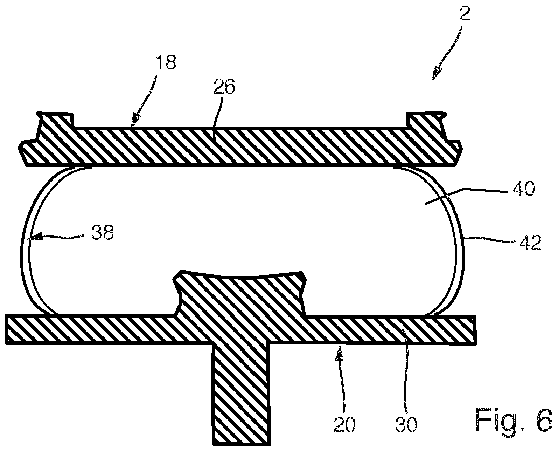

Nachdem die Kopfanschlusseinheit 18 und die Fußanschlusseinheit 20 in die entsprechenden Aufnahmesitze 22, 24 eingesetzt wurden und das Formwerkzeug 4 in Schritt d) in die Schließstellung verfahren wurde, ist es gemäß des Verfahrens vorgesehen, dass ein Fördern von einem ersten Gummimaterial durch die Einströmkanäle 16 und die entsprechenden Kanalöffnungen 14 in die Formkammer 10 des Formwerkzeugs 4 erfolgt. Dabei ist das Formwerkzeug 4 weiterhin in der Schließstellung. Dieser Schritt e) kann also unmittelbar nach dem Ausführen des Schritts d) des Verfahrens ausgeführt werden. Um das erste Gummimaterial durch die Einströmkanäle 16 zu fördern, kann der Zugangskanal 50 mit einer Fördereinheit gekoppelt sein, mittels der das erste Gummimaterial von einer entsprechenden Quelle durch den Zugangskanal 50 zu den Einströmkanälen 16 gefördert wird, sodass das erste Gummimaterial durch die Einströmkanäle 16 und sodann durch die Kanalöffnungen 14 in den Teil der Formkammer 10 gefördert wird, der zwischen der Kopfanschlusseinheit 18 und der Fußanschlusseinheit 20 ist. Durch die Verteilung der Kanalöffnungen 14 und durch die große Anzahl der Kanalöffnungen 14 kann gewährleistet werden, dass das erste Gummimaterial quasi-flächig von außen nach innen in den genannten Teil der Formkammer 10 gefördert wird. Bevorzugt ist es vorgesehen, dass eine erste, vorbestimmte Menge an dem ersten Gummimaterial in den Teil der Formkammer 10 gefördert wird. Diese erste, vorbestimmte Menge kann das Volumen des genannten Teils der Formkammer 10 zwischen der Kopfanschlusseinheit 18 und der Fußanschlusseinheit 20 bis auf ein vorbestimmtes Restvolumen füllen. Dies ist deshalb sinnvoll, da in dem Schritt f), der im Anschluss an Schritt e) ausgeführt wird, ein weiteres, nämlich das zweite Gummimaterial in den genannten Teil der Formkammer 10 gefördert werden soll. Ist das Fördern in Schritt e) des ersten Gummimaterials abgeschlossen, erfolgt das Fördern des zweiten Gummimaterials durch die Einströmkanäle 16 und die Kanalöffnungen 14 in den genannten Teil der Formkammer 10. Dabei kann wie zuvor in analoger Weise der Zugangskanal 50 verwendet werden, der mit der gleichen und/oder einer anderen Fördereinheit gekoppelt wird, um das zweite Gummimaterial von einer entsprechenden Quelle durch den Zugangskanal 50 und sodann durch die Einströmkanäle 16 zu den Kanalöffnungen 14 zu fördern. Durch das Fördern des zweiten Gummimaterials wird das zweite Gummimaterial gleichzeitig durch alle Kanalöffnungen 14 in die Formkammer 10 gedrückt, sodass eine Schutzschicht 38 aus dem zweiten Gummimaterial entsteht, die das in Schritt e) zwischen der Kopfanschlusseinheit 18 und der Fußanschlusseinheit 20 gedrückte, erste Gummimaterial mantelseitig vollständig umhüllt. Zu bemerken ist an dieser Stelle, dass das Formwerkzeug 4 zwischen dem Ausführen der Schritte e) und f) nicht geöffnet wurde, sondern, dass das Formwerkzeug 4 in der Schließstellung verbleibt. Es bedarf deshalb nur wenig Aufwand um zunächst das erste Gummimaterial in Schritt e) und danach das zweite Gummimaterial in Schritt f) zu fördern. In Schritt f) wird vorzugsweise eine zweite, vorbestimmte Menge des zweiten Gummimaterials in die Formkammer 10 gefördert, sodass der genannte Teil der Formkammer 10 zwischen der Kopfanschlusseinheit 18 und der Fußanschlusseinheit 20 vollständig von dem ersten und zweiten Gummimaterial gefüllt ist. Die zweite, vorbestimmte Menge des zweiten Gummimaterials entspricht vorzugsweise dem Restvolumen, der in Schritt e) nicht von dem ersten Gummimaterial gefüllt wurde. Das zweite Gummimaterial unterscheidet sich von dem ersten Gummimaterial. Mit anderen Worten ist das zweite Gummimaterial anders als das erste Gummimaterial. Das erste Gummimaterial weist vorzugsweise kein Flammschutzmittel auf. Hingegen ist es für das zweite Gummimaterial vorgesehen, dass das zweite Gummimaterial Flammschutzmittel enthält. Bezüglich des Flammschutzmittels wird auf die entsprechenden, vorangegangenen Erläuterungen in analoger Weise verwiesen. Nachdem das erste und zweite Gummimaterial in die Formkammer 10 in den Schritten e) und f) gefördert wurde, verbleibt das Formwerkzeug 4 in der Schließstellung und es folgt daraufhin in Schritt g) das gemeinsame Vulkanisieren des ersten und zweiten Gummimaterials, sodass aus dem ersten, vulkanisierten Gummimaterial 40 und dem zweiten, vulkanisierten Gummimaterial 42, der Kopfanschlusseinheit 18 und der Fußanschlusseinheit 20 die Gummifeder 2 entsteht, wie sie beispielhaft in der Figur 6 schematisch dargestellt ist. Das Vulkanisieren kann mittels einer Vulkanisierungsvorrichtung (nicht dargestellt) erfolgen. Um die vulkanisierte Gummifeder 2 aus dem Formwerkzeug 4 zu entnehmen, ist es bevorzugt gemäß einem Schritt h), der auch beispielhaft in dem Ablaufplan der Figur 8 dargestellt ist, vorgesehen, dass das Formwerkzeug 4 in die Öffnungsstellung verfahren wird. Dies kann mittels des Antriebs erfolgen. Daraufhin kann in einem Schritt e) die Gummifeder 2 aus der Formkammer 10 entnommen werden.

Die Gummifeder 2 bietet den Vorteil, dass das erste, vulkanisierte Gummimaterial 40 von oben durch die Kopfanschlusseinheit 18, von unten durch die Fußanschlusseinheit 20 und mantelseitig durch die Schutzschicht 38 aus dem zweiten, vulkanisierten Gummimaterial 42 brandgeschützt ist. Die Schutzschicht 38 erstreckt sich vorzugsweise ringförmig um das erste, vulkanisierte Gummimaterial 40 und außerdem ununterbrochen von der Kopfanschlusseinheit 18 zu der Fußanschlusseinheit 20. Die Schutzschicht 38 weist also vorzugsweise eine Tubusform auf.

Wird die Gummifeder 2 beispielsweise für eine Schienenfahrzeugfederung 46 verwendet, wie sie beispielhaft in der Figur 2 dargestellt ist, so ist die Gummifeder 2 dieser Schienenfahrzeugfederung 46 vor einem Brand geschützt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- A: Abstand
- 2: Gummifeder
- 4: Formwerkzeug
- 6: erste Formwerkzeugteil
- 8: zweites Formwerkzeugteil
- 10: Formkammer
- 12: Formfläche
- 14: Kanal öffnung
- 16: Einströmkanal
- 18: Kopftanschlusseinheit
- 20: Fußanschlusseinheit
- 22: erster Aufnahmesitz
- 24: zweiter Aufnahmesitz
- 26: Oberplatte
- 28: Luftfederbalg
- 30: Anschlussplatte
- 32: Fahrwerk
- 34: Fahrzeug
- 36: Mantelabschnitt
- 38: Schutzschicht
- 40: erstes, vulkanisiertes Gummimaterial
- 42: zweites, vulkanisiertes Gummimaterial
- 44: Karosserie
- 46: Schienenfahrzeugfederung
- 48: Verbindungsplatte
- 50: Zugangskanal
- 52: Ventil
- 54: Luftfeder

## Patentansprüche

1. Verfahren zur Herstellung einer Gummifeder (2), wobei das Verfahren die folgenden Schritte aufweist:
a) Bereitstellen eines Formwerkzeugs (4), das mehrere Formwerkzeugteile (6, 8) aufweist, wobei das Formwerkzeug (4) ausgebildet ist, sodass das Formwerkzeug (4) zwischen einer Schließstellung, in der die Formwerkzeugteile (6, 8) eine Formkammer (10) umschließen, und einer Öffnungsstellung, in der die Formwerkzeugteile (6, 8) zumindest teilweise voneinander beabstandet sind und dadurch die Formkammer (10) von außen zugänglich ist, verfahrbar ist, und wobei das Formwerkzeug (4) in der geschlossenen Stellung eine die Formkammer (10) umschließende Formfläche (12) bildet, die eine Mehrzahl von Kanalöffnungen (14) aufweist, die jeweils zu Einströmkanälen (16) führen;
b) Verfahren des Formwerkzeugs (4) in die Öffnungsstellung;
c) Einsetzen einer Kopfanschlusseinheit (18) und einer Fußanschlusseinheit (20) in an der Formfläche (12) des Formwerkzeugs (4) ausgebildeten Aufnahmesitze (22, 24), wobei die Kopfanschlusseinheit (18) zumindest eine Oberplatte (26) umfasst, die zum Befestigen eines Luftfederbalgs (28) ausgebildet ist, und wobei die Fußanschlusseinheit (20) zumindest eine Anschlussplatte (30) umfasst, die zum Befestigen an einem Fahrwerk (32) eins Fahrzeugs (34) ausgebildet ist;
d) Verfahren des Formwerkzeugs (4) in die Schließstellung, wobei die Kanalöffnungen (14) in einem Mantelabschnitt (36) der Formfläche (12) zwischen den Aufnahmesitzen (22, 24) verteilt angeordnet sind;
e) Fördern von einem ersten Gummimaterial durch die Einströmkanäle (16) und die Kanalöffnungen (14) in die Formkammer (10) des Formwerkzeugs (4), das in der Schließstellung ist;
f) Fördern von einem zweiten Gummimaterial durch die Einströmkanäle (16) und die Kanalöffnungen (14) in die Formkammer (10), nachdem Schritt e) beendet ist, wobei das zweite Gummimaterial Flammschutzmittel enthält und das Formwerkzeug (4) zwischen Schritt e) und f) in der Schießstellung verbleibt; und
g) Gemeinsames Vulkanisieren des ersten und zweiten Gummimaterials, sodass daraus zusammen mit der Kopfanschlusseinheit (18) und der Fußanschlusseinheit (20) eine Gummifeder (2) entsteht.

2. Verfahren nach dem vorhergehenden Anspruch, **gekennzeichnet durch** die weiteren Schritte:
h) Verfahren des Formwerkzeugs (4) in die Öffnungsstellung; und
i) Entnehmen der Gummifeder (2) aus der Formkammer (10).

3. Verfahren nach einem der vorhergehenden Ansprüche, **dadurch gekennzeichnet, dass** das erste Gummimaterial frei von Flammschutzmittel ist.

4. Verfahren nach einem der vorhergehenden Ansprüche, **dadurch gekennzeichnet, dass** das erste Gummimaterial thermoplastfrei ist.

5. Verfahren nach einem der vorhergehenden Ansprüche, **dadurch gekennzeichnet, dass** das Formwerkzeug (4) mehr als 50 Kanalöffnungen (14), mehr als 100 Kanalöffnungen (14) oder mehr als 150 Kanalöffnungen (14) aufweist.

6. Verfahren nach einem der vorhergehenden Ansprüche, **dadurch gekennzeichnet, dass** mindestens zehn Kanalöffnungen (14) je dm² Formfläche (12) zwischen den Aufnahmesitzen (22, 24) ausgebildet sind.

7. Verfahren nach einem der vorhergehenden Ansprüche, **dadurch gekennzeichnet, dass** jede Kanalöffnung (14) zu jeder benachbarten Kanalöffnung (14) einen Abstand A von weniger als 15 mm, weniger als 10 mm oder weniger als 3 mm aufweist.

8. Verfahren nach einem der vorhergehenden Ansprüche, **dadurch gekennzeichnet, dass** die Kanalöffnungen (14) zwischen den Aufnahmesitzen (22, 24) zumindest im Wesentlichen gleichmäßig verteilt angeordnet sind.

9. Verfahren nach einem der vorhergehenden Ansprüche, **dadurch gekennzeichnet, dass** das zweite Gummimaterial in Schritt f) gleichzeitig durch alle Kanalöffnungen (14) in die Formkammer (10) gedrückt wird, sodass eine Schutzschicht (38) aus dem zweiten Gummimaterial entsteht, die das in Schritt e) zwischen der Kopfanschlusseinheit (18) und der Fußanschlusseinheit (20) eingedrückte, erste Gummimaterial mantelseitig vollständig umhüllt.

10. Verfahren nach einem der vorhergehenden Ansprüche, **dadurch gekennzeichnet, dass** in Schritt e) eine erste, vorbestimmte Menge an erstem Gummimaterial in die Formkammer (10) gefördert wird.

11. Verfahren nach dem vorhergehenden Anspruch, **dadurch gekennzeichnet, dass** die erste, vorbestimmte Menge das Volumen der Formkammer (10) zwischen der Kopfanschlusseinheit (18) und der Fußanschlusseinheit (20) bis auf ein vorbestimmtes Restvolumen füllt.

12. Verfahren nach einem der vorhergehenden Ansprüche 10 bis 11, **dadurch gekennzeichnet, dass** in Schritt f) eine zweite, vorbestimmte Menge an zweitem Gummimaterial in die Formkammer (10) gefördert wird, sodass der Teil der Formkammer (10) zwischen der Kopfanschlusseinheit (18) und der Fußanschlusseinheit (20) vollständig von dem ersten und zweiten Gummimaterial gefüllt ist.

13. Verfahren nach dem vorhergehenden Anspruch, **dadurch gekennzeichnet, dass** die zweite Menge dem Restvolumen entspricht.

14. Verfahren nach einem der vorhergehenden Ansprüche, **dadurch gekennzeichnet, dass** das Flammschutzmittel halogenfrei ist.

## Claims

1. Method for producing a rubber spring (2), wherein the method comprises the following steps:
a) providing a moulding tool (4) which has a plurality of moulding tool parts (6, 8), wherein the moulding tool (4) is configured such that the moulding tool (4) can be moved between a closed position, in which the moulding tool parts (6, 8) enclose a moulding chamber (10), and an open position, in which the moulding tool parts (6, 8) are at least partially spaced apart from one another and, as a result, the moulding chamber (10) is accessible from the outside, and wherein, in the closed position, the moulding tool (4) forms a mould surface (12) which encloses the moulding chamber (10) and which has a plurality of channel openings (14) which each lead to inflow channels (16);
b) moving the moulding tool (4) into the open position;
c) inserting a head connection unit (18) and a foot connection unit (20) into receiving seats (22, 24) which are configured on the mould surface (12) of the moulding tool (4), wherein the head connection unit (18) comprises at least one upper plate (26) which is configured for fastening of an air spring bellows (28), and wherein the foot connection unit (20) comprises at least one connection plate (30) which is configured for fastening to a chassis (32) of a vehicle (34);
d) moving the moulding tool (4) into the closed position, wherein the channel openings (14) are arranged distributed in a lateral portion (36) of the mould surface (12) between the receiving seats (22, 24);
e) conveying a first rubber material through the inflow channels (16) and the channel openings (14) into the moulding chamber (10) of the moulding tool (4), which is in the closed position;
f) conveying a second rubber material through the inflow channels (16) and the channel openings (14) into the moulding chamber (10), after step e) has ended, wherein the second rubber material contains flame retardant and the moulding tool (4) remains in the closed position between step e) and f); and
g) joint vulcanization of the first and second rubber material, such that this, together with the head connection unit (18) and the foot connection unit (20), produces a rubber spring (2).

2. Method according to the preceding claim, **characterized by** the further steps:
h) moving the moulding tool (4) into the open position; and
i) removing the rubber spring (2) from the moulding chamber (10).

3. Method according to either of the preceding claims, **characterized in that** the first rubber material is free from flame retardant.

4. Method according to one of the preceding claims, **characterized in that** the first rubber material is free from thermoplastic.

5. Method according to one of the preceding claims, **characterized in that** the moulding tool (4) has more than 50 channel openings (14), more than 100 channel openings (14) or more than 150 channel openings (14).

6. Method according to one of the preceding claims, **characterized in that** at least 10 channel openings (14) per dm² of mould surface (12) are configured between the receiving seats (22, 24).

7. Method according to one of the preceding claims, **characterized in that** each channel opening (14) has a distance A of less than 15 mm, less than 10 mm or less than 3 mm from each adjacent channel opening (14).

8. Method according to one of the preceding claims, **characterized in that** the channel openings (14) are arranged distributed between the receiving seats (22, 24) in an at least substantially uniform manner.

9. Method according to one of the preceding claims, **characterized in that**, in step f), the second rubber material is pressed into the moulding chamber (10) through all channel openings (14) at the same time, such that a protective layer (38) composed of the second rubber material is produced and completely encases the lateral surface of the first rubber material which is pressed in between the head connection unit (18) and the foot connection unit (20) in step e).

10. Method according to one of the preceding claims, **characterized in that**, in step e), a first, predetermined quantity of first rubber material is conveyed into the moulding chamber (10).

11. Method according to the preceding claim, **characterized in that** the first, predetermined quantity fills the volume of the moulding chamber (10) between the head connection unit (18) and the foot connection unit (20) apart from a predetermined residual volume.

12. Method according to one of preceding Claims 10 to 11, **characterized in that**, in step f), a second, predetermined quantity of second rubber material is conveyed into the moulding chamber (10), such that the part of the moulding chamber (10) between the head connection unit (18) and the foot connection unit (20) is filled completely by the first and second rubber material.

13. Method according to the preceding claim, **characterized in that** the second quantity corresponds to the residual volume.

14. Method according to one of the preceding claims, **characterized in that** the flame retardant is halogen-free.

## Revendications

1. Procédé de fabrication d'un ressort en caoutchouc (2), le procédé comprenant les étapes suivantes :
a) fournir un outil de moulage (4) qui comporte une pluralité de parties d'outil de moulage (6, 8), l'outil de moulage (4) étant conçu de sorte que l'outil de moulage (4) puisse être déplacé entre une position fermée, dans laquelle les parties d'outil de moulage (6, 8) renferment une chambre de moulage (10), et une position ouverte, dans laquelle les parties d'outil de moulage (6, 8) sont au moins partiellement espacées les unes des autres et la chambre de moulage (10) est ainsi accessible de l'extérieur, et l'outil de moulage (4) formant dans la position fermée une surface de moulage (12) qui renferme la chambre de moulage (10) et qui comporte une pluralité d'ouvertures de canal (14) qui mènent chacune à des canaux d'entrée (16) ;
b) déplacer l'outil de moulage (4) jusque dans la position ouverte ;
c) insérer une unité de raccordement de tête (18) et une unité de raccordement de pied (20) dans des sièges de réception (22, 24) formés sur la surface de moulage (12) de l'outil de moulage (4), l'unité de raccordement de tête (18) comprenant au moins une plaque supérieure (26) qui est conçue pour fixer un soufflet à ressort pneumatique (28), et l'unité de raccordement de pied (20) comprenant au moins une plaque de raccordement (30) qui est conçue pour être fixée à un mécanisme de roulement (32) d'un véhicule (34) ;
d) déplacer l'outil de moulage (4) jusque dans la position fermée, les ouvertures de canal (14) étant réparties dans une portion d'enveloppe (36) de la surface de moulage (12) entre les sièges de réception (22, 24),
e) transporter un premier matériau caoutchouteux à travers les canaux d'entrée (16) et les ouvertures de canal (14) jusque dans la chambre de moulage (10) de l'outil de moulage (4) qui est dans la position fermée ;
f) transporter un deuxième matériau caoutchouteux à travers les canaux d'entrée (16) et les ouvertures de canal (14) jusque dans la chambre de moulage (10) après que l'étape e) est terminée, le deuxième matériau caoutchouteux contenant des agents anti-flamme et l'outil de moulage (4) restant dans la position fermée entre les étapes e) et f) ; et
g) vulcaniser conjointement les premier et deuxième matériaux caoutchouteux de façon à produire à partir de ceux-ci un ressort en caoutchouc (2) conjointement avec l'unité de raccordement de tête (18) et l'unité de raccordement de pied (20).

2. Procédé selon la revendication précédente, **caractérisé par** les étapes supplémentaires suivantes :
h) déplacer l'outil de moulage (4) jusque dans la position ouverte ; et
i) retirer le ressort en caoutchouc (2) de la chambre de moulage (10).

3. Procédé selon l'une des revendications précédentes, **caractérisé en ce que** le premier matériau caoutchouteux est exempt d'agent anti-flamme.

4. Procédé selon l'une des revendications précédentes, **caractérisé en ce que** le premier matériau caoutchouteux est exempt de matière thermoplastique .

5. Procédé selon l'une des revendications précédentes, **caractérisé en ce que** l'outil de moulage (4) comporte plus de 50 ouvertures de canal (14), plus de 100 ouvertures de canal (14) ou plus de 150 ouvertures de canal (14).

6. Procédé selon l'une des revendications précédentes, **caractérisé en ce qu'**au moins dix ouvertures de canal (14) par dm² de surface de moulage (12) sont formées entre les sièges de réception (22, 24).

7. Procédé selon l'une des revendications précédentes, **caractérisé en ce que** chaque ouverture de canal (14) est une distance A inférieure à 15 mm, inférieure à 10 mm ou inférieure à 3 mm, de chaque ouverture de canal adjacente (14).

8. Procédé selon l'une des revendications précédentes, **caractérisé en ce que** les ouvertures de canal (14) sont disposées entre les sièges de réception (22, 24) de manière au moins sensiblement uniformément répartie.

9. Procédé selon l'une des revendications précédentes, **caractérisé en ce qu'**à l'étape f) le deuxième matériau caoutchouteux est pressé simultanément à travers toutes les ouvertures de canal (14) jusque dans la chambre de moulage (10) de façon à produire à partir du deuxième matériau caoutchouteux une couche de protection (38) qui enrobe complètement du côté de l'enveloppe le premier matériau caoutchouteux pressé à l'étape e) entre l'unité de raccordement de tête (18) et l'unité de raccordement de pied (20).

10. Procédé selon l'une des revendications précédentes, **caractérisé en ce qu'**à l'étape e) une première quantité prédéterminée de premier matériau caoutchouteux est acheminée jusque dans la chambre de moulage (10).

11. Procédé selon la revendication précédente, **caractérisé en ce que** la première quantité prédéterminée remplit le volume de la chambre de moulage (10) entre l'unité de raccordement de tête (18) et l'unité de raccordement de pied (20) à l'exception d'un volume résiduel prédéterminé.

12. Procédé selon l'une des revendications précédentes 10 à 11, **caractérisé en ce qu'**à l'étape f) une deuxième quantité prédéterminée de deuxième matériau caoutchouteux est acheminée jusque dans la chambre de moulage (10) de sorte que la partie de la chambre de moulage (10) située entre l'unité de raccordement de tête (18) et l'unité de raccordement de pied (20) est complètement remplie avec les premier et deuxième matériaux caoutchouteux.

13. Procédé selon la revendication précédente, **caractérisé en ce que** la deuxième quantité correspond au volume résiduel.

14. Procédé selon l'une des revendications précédentes, **caractérisé en ce que** l'agent anti-flamme est exempt d'halogène.
